# EUROPEAN PATENT SPECIFICATION

(11) **EP 1 715 658 B1**
(45) Date of publication and mention of the grant of the patent: **31.10.2007**
(21) Application number: 06115362.3
(22) Date of filing: 19.11.1999
(51) Int. Cl.: H04L 29/14, H04L 29/06, H04Q 3/00, H04L 12/66, H04M 7/00

(54) **Method and systems for communicating SS7 messages**
Verfahren und Systeme zur Übermittlung von SS7-Nachrichten
Procédé et systèmes de communication de messages SS7

(30) Priority: 04.12.1998 US 205809; 05.04.1999 US 127889 P; 07.06.1999 US 137988 P
(43) Date of publication of application: 25.10.2006
(62) Divisional of application: 99965846.1
(73) Proprietor: Tekelec, Calabasas, CA 91302 (US)
(72) Inventor: Sprague, David M., Raleigh, NC 27615 (US); Brendes, Dan Alan, NC 27615 (US); Ravishankar, Venkatarmaiah, NC 27502 (US); Miller, Paul Andrew, Morrisville, NC 27560 (US)
(74) Representative: Skuhra, Udo

(56) References cited:
- US-A- 5 774 695
- CHE-LIANG YANG ET AL: "The design and implementation of a service logic execution environment platform" GLOBAL TELECOMMUNICATIONS CONFERENCE, 1993, INCLUDING A COMMUNICATIONS THEORY MINI-CONFERENCE. TECHNICAL PROGRAM CONFERENCE RECORD, IEEE IN HOUSTON. GLOBECOM '93., IEEE HOUSTON, TX, USA 29 NOV.-2 DEC. 1993, NEW YORK, NY, USA,IEEE, 29 November 1993 (1993-11-29), pages 1911-1917, XP010109974 ISBN: 0-7803-0917-0

## Description

### Priority Application Information

This application claims the benefit of: U.S. Patent Application 09/205,809 filed December 4, 1998 (pending); U.S. Provisional Patent Application No. 60/127,889 filed April 5, 1999, and U.S. Provisional Patent Application No. 60/137,988 filed June 7, 1999.

### Field of the Invention

The present invention relates generally to methods and systems for communicating signaling system 7 (SS7) user part messages among SS7 nodes and internet protocol (IP) nodes. More particularly, the present invention relates to methods and systems for communicating SS7 user part messages among SS7 signaling points and IP nodes using signal transfer points (STPs).

### Background of the Invention

Modern telecommunications networks generally include two separate communication pathways or subnetworks. The first is a voice network that handles the transmission of voice or other information between users. The second is a signaling network that facilitates the dynamic linking of a plurality of voice network circuits, such that a voice-type connection is established between a calling party and a called party. These functions are generically referred to as call setup and call tear down. Additionally, the signaling network provides a framework through which non-voice related information can be transported in a manner that is transparent to the user. This signaling technique is often referred to as "out of band" signaling, where the term "band" implies voice band. Common examples of such out of band data transport are the access of 800 number database services, calling card verification services, number portability services, and caller ID services.

In order to provide consistent and reliable communication across the signaling network infrastructure, a common or standard digital signaling protocol known as SS7 has been developed. SS7 is an out of band common channel signaling system that uses labeled messages to transport circuit related signaling information, non-circuit related signaling information, network resident database service information and other information that can be used for the establishment of communication services.

From a hardware perspective, an SS7 network includes a plurality of SS7 nodes, generically referred to as signaling points (SPs), that are interconnected using signaling links, also referred to as SS7 links. At least three types of SPs are provided in an SS7 network: service switching points (SSPs), signal transfer points (STPs), and service control points (SCPs).

An SSP is normally installed in tandem or Class 5 offices. The SSP is capable of handling both in-band signaling and SS7 signaling. An SSP can be a customer switch, an end-office, an access tandem and/or a tandem. An STP transfers signaling messages from one signaling link to another. STPs are packet switches and are generally installed in mated pairs. Finally, SCPs control access to databases, such as 800 number translation databases, 800 number carrier identification databases, credit card verification databases, etc.

Signaling datalinks are transmission facilities used to connect SPs together. They are dedicated bidirectional facilities operating at 56 kbps in the U.S. and Canada and at 64 kbps when clear channel capability is deployed. Normally, every link has a mate for redundancy and enhanced network integrity.

Signaling datalinks include access links or "A" links that connect SSPs to STPs and that connect SCPs to STPs, as shown in Figure 1. Bridge links or "B" links are used to connect mated STPs to other mated STPs that are at the same hierarchical level, as shown in Figure 2. Cross links or "C" links connect mated STPs together, as shown in Figure 3. C links are used for passing messages between STPs when signaling network failures are encountered.

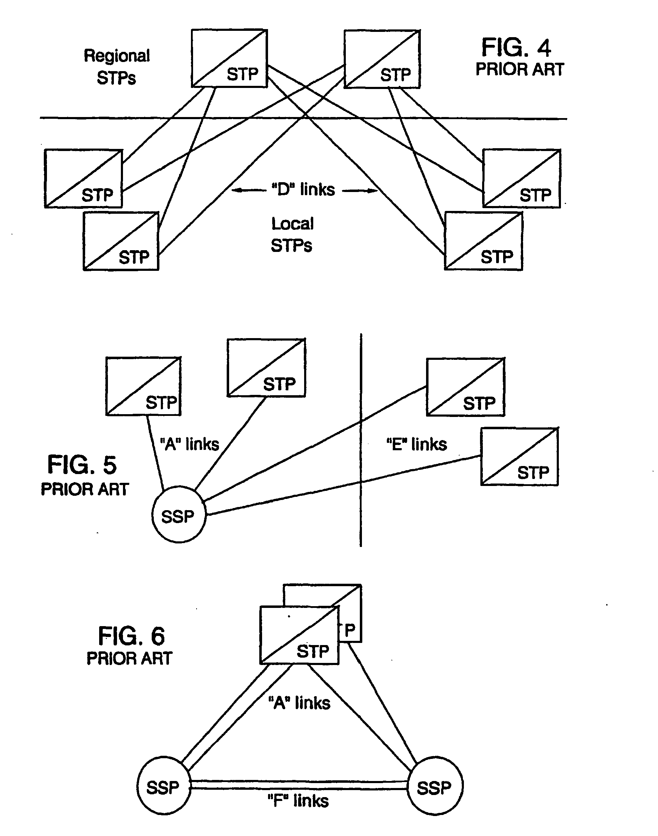

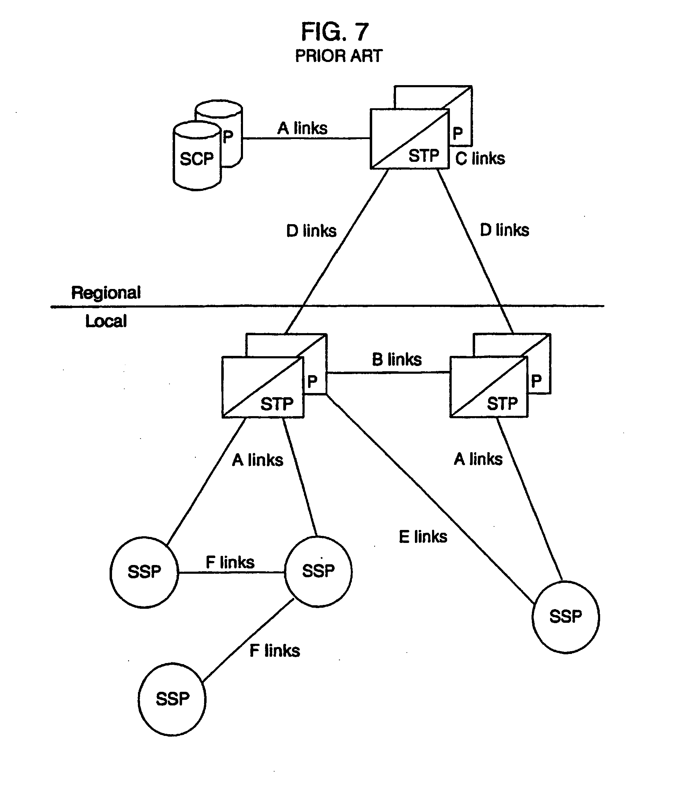

Diagonal links or "D" links connect STPs of different hierarchical levels, as shown in Figure 4. Extended links or "E" links connect SSPs to STPs that are not within their associated local STP area, as shown in Figure 5. Finally, fully associated links or "F" links connect SSPs directly together without STPs, as shown in Figure 6. Figure 7 is a block diagram of a two-level SS7 network including a summary of possible link deployment.

SS7 also includes a network protocol. As a protocol, SS7 defines a hierarchy or structure of the information contained in a message or data packet that is transmitted between SPs of an SS7 network over signaling links. This internal data structure is often referred to as an SS7 protocol stack which includes the following four SS7 levels:
- Level 1:: The Physical Level
- Level 2:: The Datalink (or Link) Level
- Level 3:: The Network Level
- Level 4:: User Parts and Application Parts Level

The physical level, also referred to as message transfer part (MTP) level 1, is the lowest or most fundamental level and is the first level that is used to interpret and process an incoming message. This level determines and/or provides the electrical characteristics to transmit the digital data over the interface being used. Following interpretation/processing at the physical level, the incoming message is passed up the stack to the datalink level.

The datalink level, also referred to as MTP level 2, resides adjacent and above the physical level and is responsible for providing error detection/correction and properly sequenced delivery of SS7 message packets. Following interpretation/processing at the datalink level, the incoming message is passed up the stack to the network level.

The network level, also referred to as MTP level 3, resides adjacent and above the datalink level and provides the information necessary for message packet routing, message packet discrimination, and message packet distribution. Functionally, message discrimination determines whether the message packet is addressed to the receiving SP or to another SP. If the message contains the local address of the receiving SP, then the message is passed on to message distribution. Message distribution routes the message to the proper application part or user part within the receiving SP. If the message is not addressed to the receiving SP, then it is passed on to the message router, which determines the physical address of the SP to which the message is to be sent. Following interpretation/processing at the network level, the incoming message is passed up the stack to the user parts and application parts level.

The user parts and application parts level resides adjacent and above the network level. User part protocols perform call setup and tear down. Exemplary user part protocols that can be included in SS7 level 4 are ISDN user part (ISUP), telephone user part (TUP), and broadband ISDN user part (BISUP).

Application part protocols provide access to network databases for services, such as 800 number service, credit card verification, and number portability. The transaction capabilities application part (TCAP) protocol is an example of an SS7 level 4 protocol that can be used to provide access to these and other services.

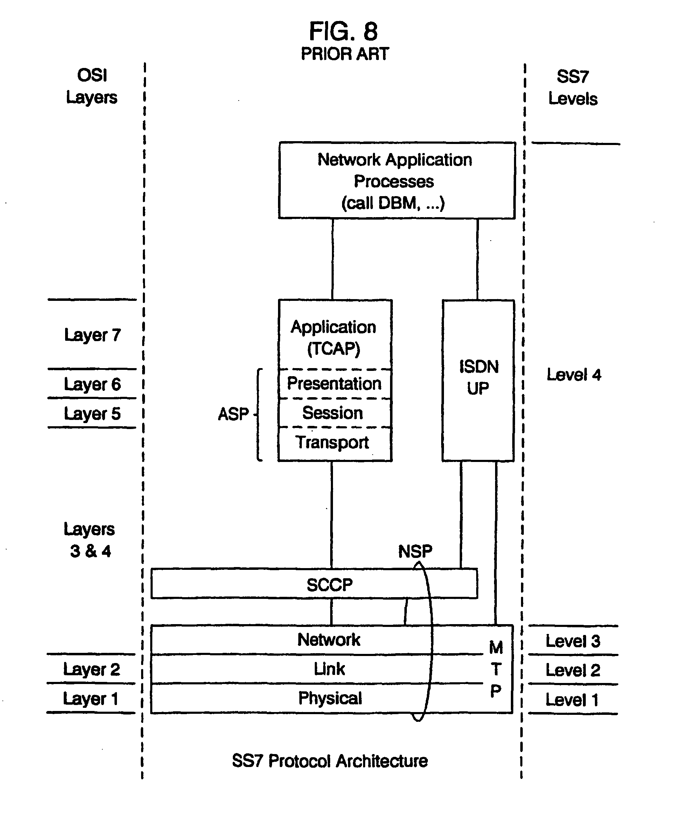

The above description has assumed that an incoming message is being processed. An outgoing message is passed through the protocol stack in the opposite direction, entering at the user part level and exiting from the physical level. Figure 8 illustrates SS7 protocol architecture relative to SS7 levels and relative to standard Open System Integration (OSI) layers.

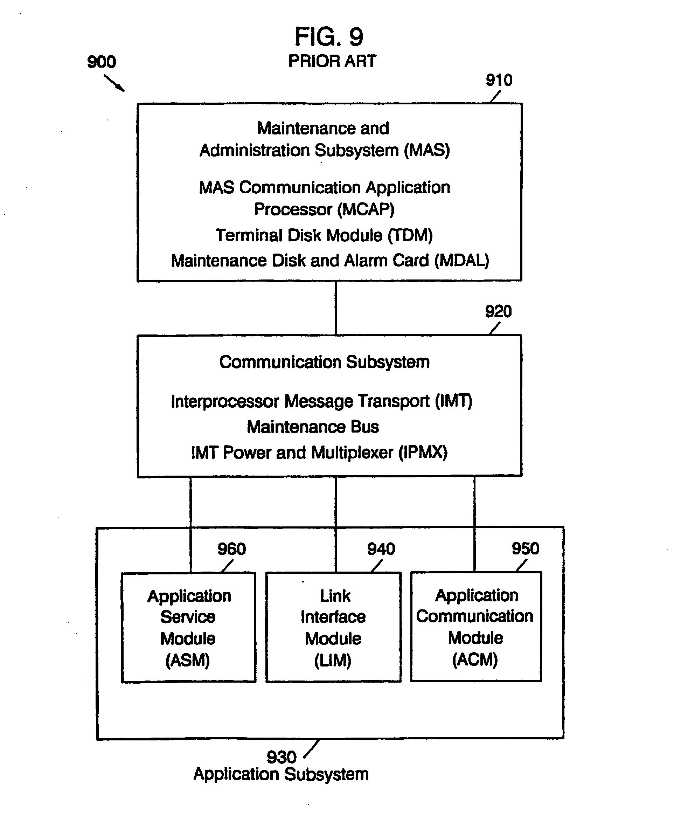

The above-mentioned SS7 protocol levels are implemented by hardware and software residing in SS7 signaling points, such as signal transfer points (STPs). A high performance STP is marketed by the assignee of the present application as the Eagle® STP. A block diagram of a conventional Eagle® STP is shown in Figure 9. A detailed description of the Eagle® STP can be found in the *Eagle^{®} Feature Guide* PN/9110-1225-01, Rev. B, January 1998, published by Tekelec, the disclosure of which is hereby incorporated herein by reference. As described in this publication, Eagle® STP generally designated **900** includes the following subsystems: maintenance and administration subsystem (MAS) **910,** communication subsystem **920** and application subsystem **930.** MAS **910** provides maintenance communications, initial program load, peripheral services, alarm processing and system disks. Communication subsystem **920** includes an interprocessor message transport (IMT) bus that is the main communication bus among all subsystems in Eagle® STP **900.** This high speed communications system functions as two 125 Mbps counter-rotating serial buses.

Application subsystem **930** includes application cards that are capable of communicating with the other cards through the IMT buses. The illustrated application subsystem **930** includes three types of application cards: link interface module (LIM) **940** that provides SS7 links and X.25 links, application communication module (ACM) **950** that provides a TCP/IP interface for sending copies of SS7 message signal units (MSUs) over ethernet, and application service module (ASM) 960 that provides global title translation, gateway screening and other services. A translation service module (TSM) can also be provided for local number portability.

LIM **940** provides level **1** and some level 2 functions on SS7 signaling links. ACM **950** provides access to a remote host for an STP LAN feature. The STP LAN feature provides unidirectional access to copies of SS7 MSUs from the STP to a remote host. Unidirectional connection from the STP to a host is provided through an ethernet LAN using TCP/IP protocol. Finally, ASM 960 provides additional memory that is used to store translation tables and screening data. A detailed description of the Eagle® STP is provided in the above-cited Feature Guide and need not be further described.

A brief conceptual overview of the Eagle® STP is provided in the brochure entitled Eagle® STP Platform, Publication 908-0126-01, Rev. A, Tekelec, 1997. As described therein, the Eagle® STP is a high capacity, fully fault tolerant packet switch and self-contained local area network for exchanging data messages between a half-dozen to several hundred or more message processing modules. In the Eagle® STP system architecture, three functionally specific application subsystems access each other via a communications subsystem which includes dual counter-rotating, 125 Mbps IMT buses. The application subsystems include LIMs that provide SS7 and X.25 access to telecommunication signaling networks, ACMs that provide TCP/IP access to local area networks and a MAS that provides maintenance communication, peripheral services alarm processing and system disks. As stated in this brochure, "ACMs communicate directly with external, collocated service application systems via a TCP/IP, 10 Mbit/sec LAN interface mounted on the Ethernet Interface Appliqué (EIA). Examples of external application systems include: an SCP not equipped with SS7 signaling links, a routing or charging database system, cellular/PCS home or visitor location registers (HLR, VLR), a message accounting system, a voice/record/image processing system, and other intelligent network (IN) service nodes and peripherals that require direct interface via SS7 signaling links." Thus, the Eagle® STP platform publication does not describe communication between an STP and an SS7 node. The ACM card described therein is used primarily for diagnostic purposes.

A detailed description of the operation of the Eagle® STP-LAN interface feature is provided in the brochure entitled Eagle® STP STP LAN Interface Feature, Publication 908-0134-01, Rev. B, Tekelec 1997. As described therein, "The STP-LAN Interface Feature enables the collection of copies of SS7 messages that transit the Eagle® STP. This feature, along with user-provided data processing equipment, allows the Eagle® STP to perform functions beyond normal Signal Transfer Point (STP) functionality, such as auditing and accounting functions, message trap and trace and protocol conformance analysis. The Eagle® STP-LAN Interface Feature enables the user to connect external data collection or processing systems directly to the Eagle® STP via TCP/IP, 10 Mbits/sec Ethernet LAN. It enables a user to select either ISUP messages, SCCP/TCAP messages, or both, for transfer to the external monitoring system. It also adds a time-stamp to identify the selected messages and their sequence for subsequent processing." As is also shown in this brochure, the Ethernet LAN link is a unidirectional link from the ACM to an external processor (host) for diagnostic purposes. Moreover, the Eagle® STP LAN feature is not suitable for communicating SS7 messages between SS7 signaling points, not to mention communicating messages to SS7 signaling points for call setup or other call-related signaling functions.

While communicating SS7 messages over SS7 links can be desirable in some instances, it can also be desirable to communicate SS7 messages over other types of networks. SS7 links provide a high-bandwidth, reliable communication medium for SS7 messages. However, a dedicated SS7 link is expensive and often provides too much bandwidth for a given application. In addition, the proliferation of networks other than SS7 networks makes these networks possible candidates for SS7 message traffic. One type of network conventionally used to transport SS7 messages is an X.25 network. For example, it is known to provide a database transport access feature that intercepts SS7 message signaling units originating from an X.25 network. This feature is described in a brochure entitled Eagle® STP Database Transport Access Feature, Publication 908-0136-01, Rev. B, Tekelec, 1997.

It is also known to use protocol converters for some protocols in connection with STPs. For example, the Eagle® STP X.25 protocol conversion feature provides interfacing and connectivity between nodes on an SS7 network and nodes on an X.25 network. This feature is described in a brochure entitled Eagle® STP X.25 to SS7-IS.41 Protocol Conversion Feature, Publication 908-0135-01, Rev. B, Tekelec, 1997. Similarly, it is known to provide an ANSI-ITU gateway to enable an Eagle® STP to interconnect to other types of signaling networks. This feature is described in a brochure entitled Eagle® STP ANSI-ITU Gateway Feature, Publication 908-0133-01, Rev. B, Tekelec, 1997.

Protocol converters are also known for translating protocols between SS7 and non-SS7 networks. For example, the Tekelec SS7-Frame Relay Access Device (FRAD) translates SS7 protocol information between an SS7 network and a frame relay network. This feature is described in a brochure entitled *S*S7-Frame Relay Access Device SS7 Protocol Information Translator, Publication 908-0167-01, Rev. A, Tekelec, 1997.

Protocol conversion for SS7 networks is also described in U.S. Patent 5,793,771 to Darland et al., entitled *"Communication Gateway"* (hereinafter, "the '771 Patent"). The '771 Patent describes a system and method for protocol translation between a foreign postal telephone and telegraph network and a domestic communication service provider, for verifying international credit card numbers. The system includes a communications gateway that consists of a computer located between the foreign network and the domestic network exclusively for performing protocol conversion. The communications gateway is not a signal transfer point. The communications gateway is only a protocol converter, and the communications gateway includes an SS7 module for sending and receiving a plurality of incoming and outgoing SS7 queries and responses. The communications gateway also includes an inbound subsystem module, coupled to the SS7 module, for translating the incoming SS7 queries from an SS7 protocol to a non-SS7 protocol.

The '771 Patent discloses that the inbound subsystem module converts incoming SS7 messages into network information distributed service (NIDS) format and TCP format. However, the only type of SS7 messages that are discussed are TCAP messages, where MTP and SCCP layers are removed from the messages and a TCP header is added to the messages. The translated incoming queries are forwarded to an end user using the non-SS7 protocol. The inbound subsystem module also translates any responses corresponding to the incoming SS7 queries from the non-SS7 protocol to the SS7 protocol.

The communications gateway of the '771 Patent further includes an outbound subsystem module, coupled to the SS7 module, for translating outgoing SS7 queries from the non-SS7 protocol to the SS7 protocol. Again, these queries are disclosed as being TCAP queries for international credit card verification. The translated outgoing queries are sent via the SS7 module across an SS7 network. The outbound subsystem module also translates SS7 responses corresponding to the outgoing SS7 queries from the SS7 protocol to the non-SS7 protocol. The translated responses corresponding to the outgoing SS7 queries are forwarded to an end user while in the non-SS7 protocol.

U.S. Patent 5,706,286 to Reiman et al., entitled *"SS7 Gateway"* discloses a protocol converter separate from an STP that converts TCAP queries to NIDS format and vice-versa for credit card validation.

U.S. Patent 5,640,446 to Everett et al., entitled *"System and Method of Validating Special Service Calls Having Different Signaling Protocols"discloses* a protocol converter external to an STP that converts TCAP queries to NIDS format for calling card transactions.

One problem with conventional protocol converters is that these devices require specialized processing hardware and software that reside in a separate location from the STP. These protocol converters also lack the processing speed and functionality of a signal transfer point, such as the above-mentioned Eagle® STP.

Yet another problem with conventional protocol converters is that the protocol converters are incapable of converting SS7 messages to other protocols without terminating the layer being transported. As a result, protocol converters can be required to implement the entire protocol stack.

Yet another problem with the above-mentioned protocol converters is that they only address translation between SS7 TCAP messages and TCP packets. In encapsulating TCAP messages, the MTP layer 3 information is stripped from the message. There are numerous other SS7 message payload types (ISUP, TUP, BISUP, etc.) that cannot be TCP/IP-encapsulated and routed through an IP network without including at least some of the routing label information contained in MTP level 3. The functionality of such SS7 messages is impaired, if not destroyed in many cases without this MTP lower level or routing label information. In practice, such a protocol conversion task presents a more difficult and challenging problem than the relatively simple case of TCP/IP-encapsulated TCAP/SCCP information.

Accordingly, there exists a long-felt need for methods and systems for transmitting SS7 user part messages including lower-level MTP protocol information, over an IP network using signal transfer points.

### Disclosure of the Invention

The present invention includes a method for reliably recovering SS7 user part message packets when a TCP socket fails. The method includes establishing first and second TCP connections over first and second sockets between first and second SS7 nodes. Data packets are transmitted from the first SS7 node to the second SS7 node over one of the TCP connections. The data packets each include an application-level sequence number indicator for sequencing data packets received by the first and second SS7 nodes. In response to determining that one of the TCP sockets has failed, a recovery packet is transmitted from each node to the other node including the application-level sequence number indicating the last data packet received by each node. Data communications can then occur over the socket that did not fail.

These and other objects are achieved in whole or in part by the present invention. Some of the objects of the invention having been stated hereinabove, other objects will become evident as the description proceeds, when taken in connection with the accompanying drawings as best described hereinbelow.

### Brief Description of the Drawings

The present invention will now be explained with reference to the accompanying drawings of which:

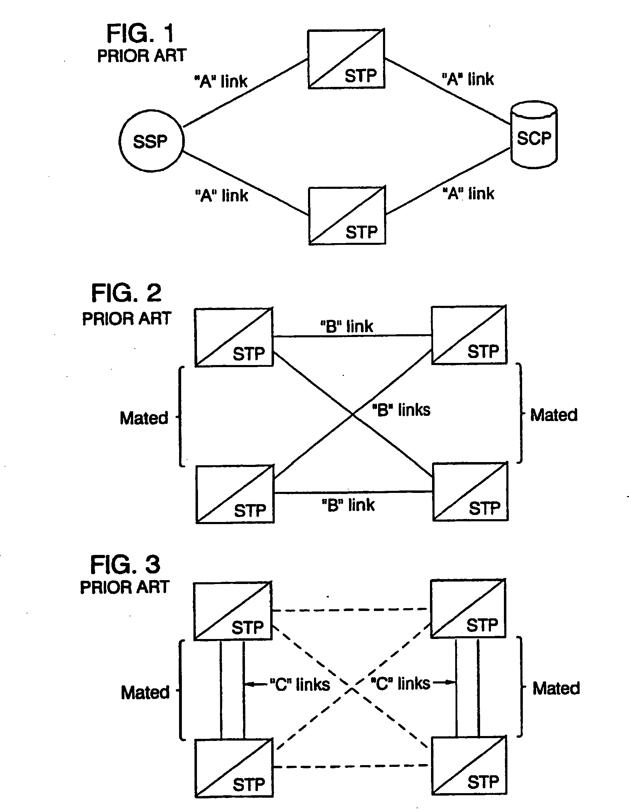

Figures 1-7 are block diagrams illustrating signaling datalinks and SPs of conventional SS7 networks;
Figure 8 is a block diagram illustrating SS7 protocol architecture relative to SS7 levels and relative to standard open system integration (OSI) layers;
Figure 9 is a block diagram of a conventional Eagle® STP;

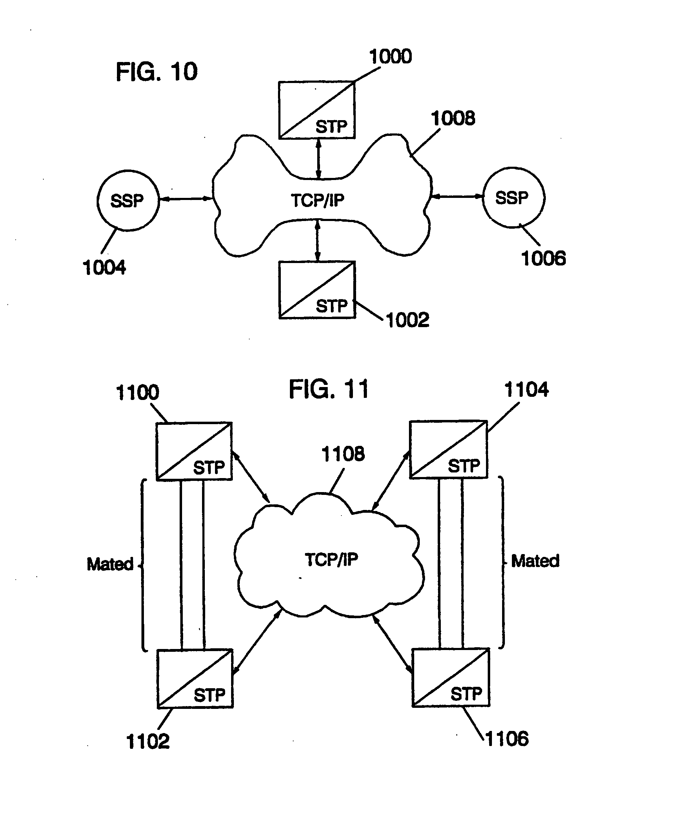

Figures 10-14 are block diagrams illustrating exemplary network configurations for bidirectional communication of SS7 user part messages between an STP and at least one of the other SPs in an SS7 network using TCP/IP according to embodiments of the present invention;

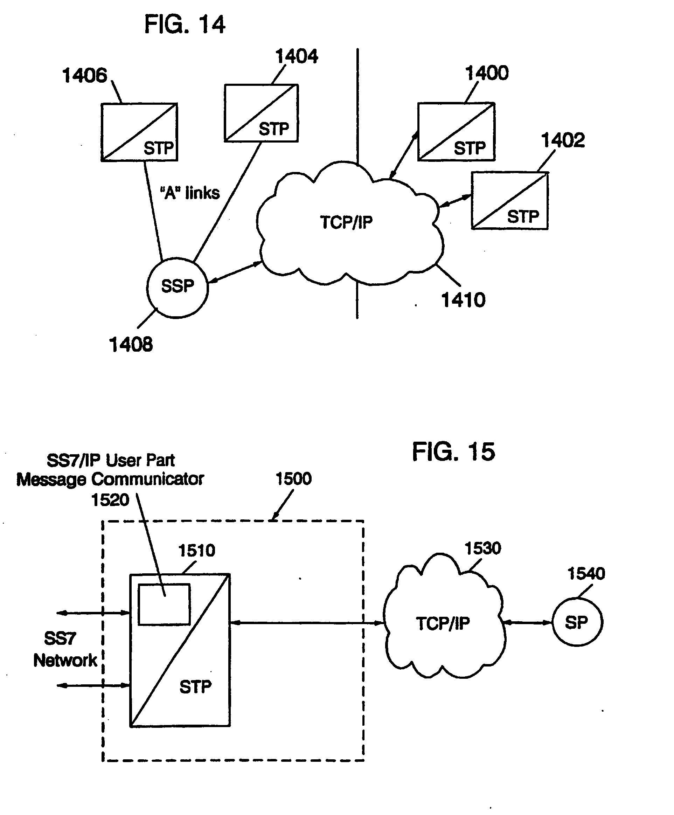

Figure 15 is a block diagram of an SP according to an embodiment of the present invention;

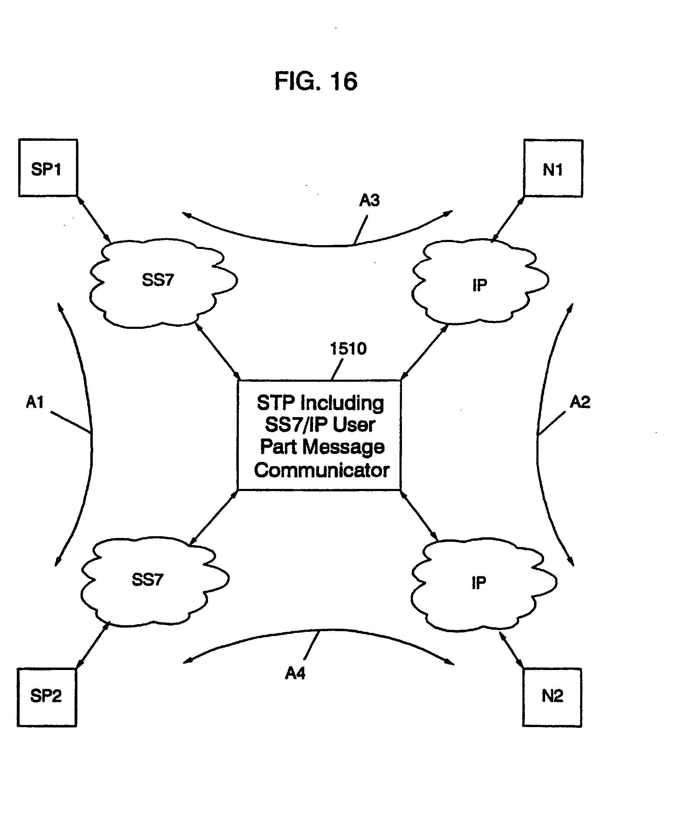

Figure 16 is a block diagram illustrating bidirectional transport of user part messages among SS7 and IP network elements using an STP according to an embodiment of the present invention;

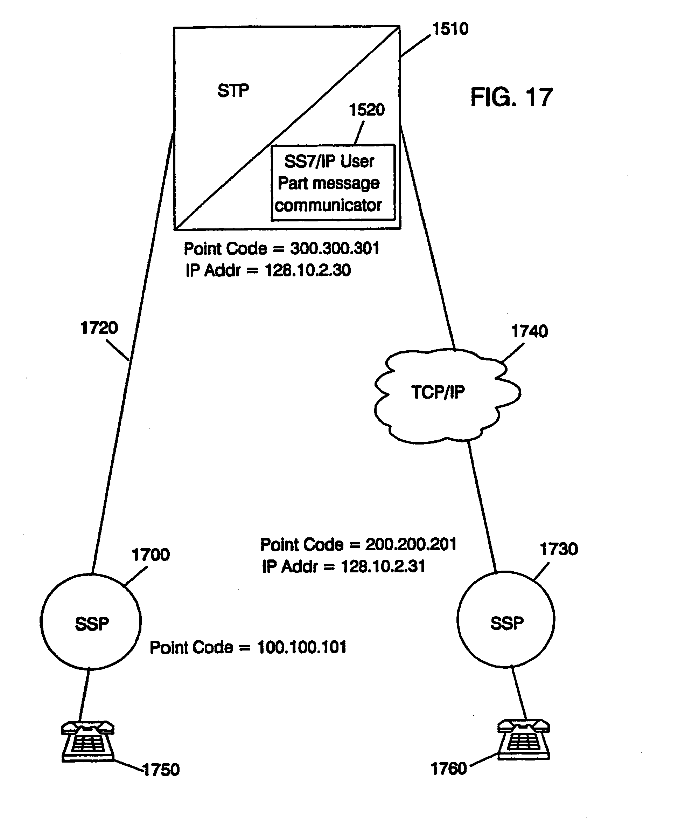

Figure 17 is a block diagram illustrating an exemplary network configuration for user part message flow according to an embodiment of the present invention;

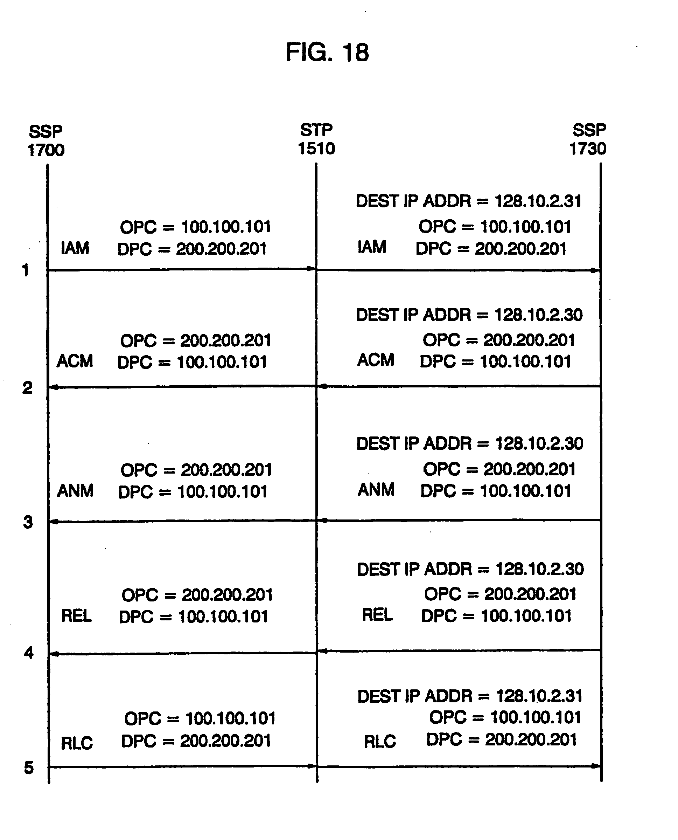

Figure 18 is a call flow diagram illustrating exemplary user part message flow in the network configuration illustrated in Figure 17;

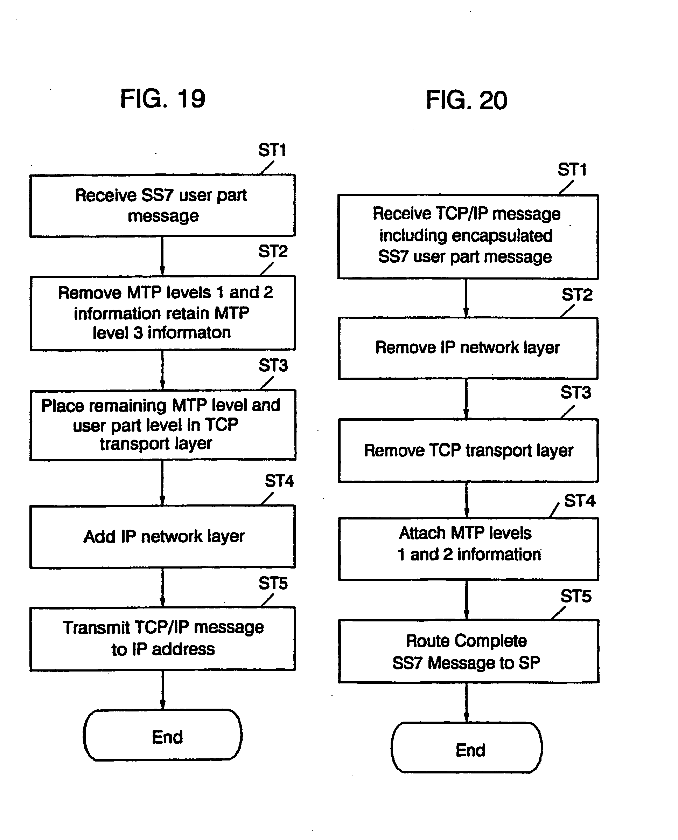

Figures 19 and 20 are flowcharts illustrating bidirectional communication of SS7 messages between an STP and at least one other SP according to embodiments of the present invention;

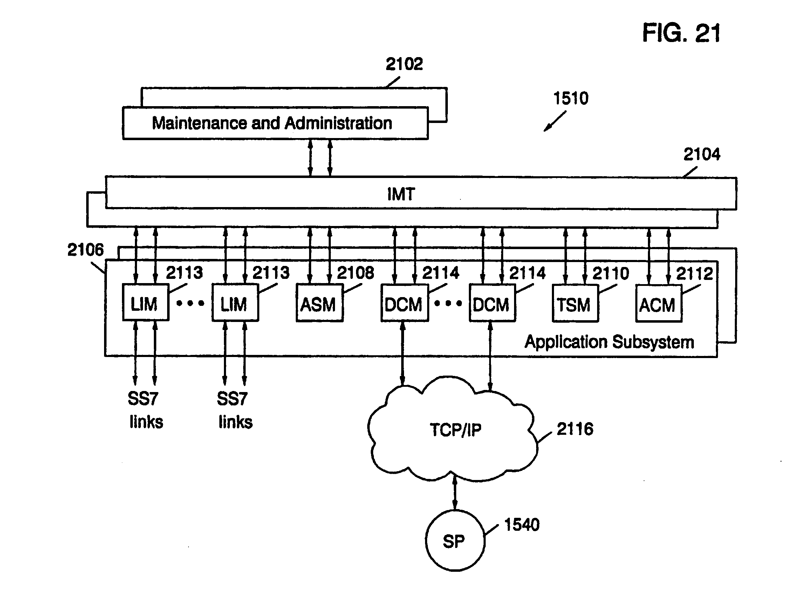

Figure 21 is a block diagram of exemplary hardware of an STP capable of communicating user part messages over IP networks according to an embodiment of the present invention;

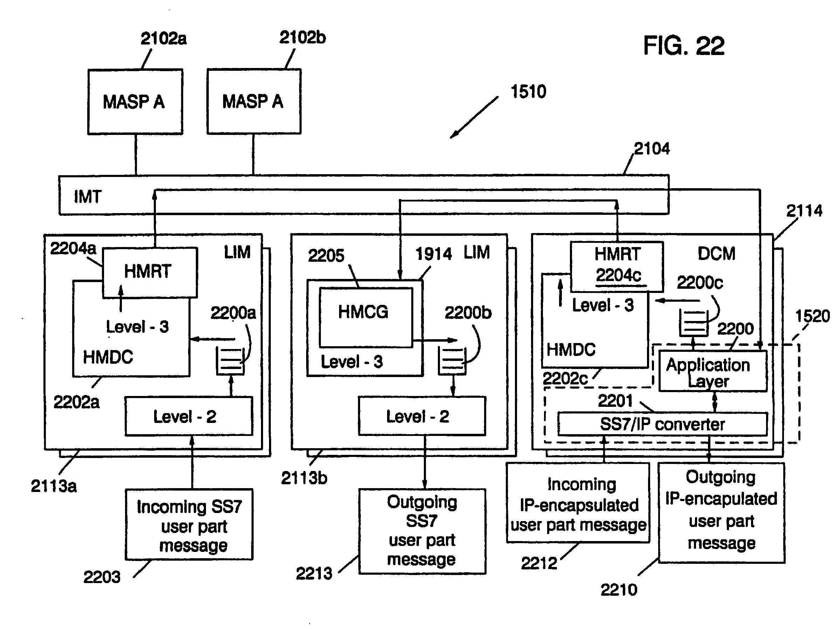

Figure 22 is a detailed block diagram illustrating exemplary software in an STP for bidirectional SS7 user part message communication over SS7 and IP networks according to an embodiment of the present invention;

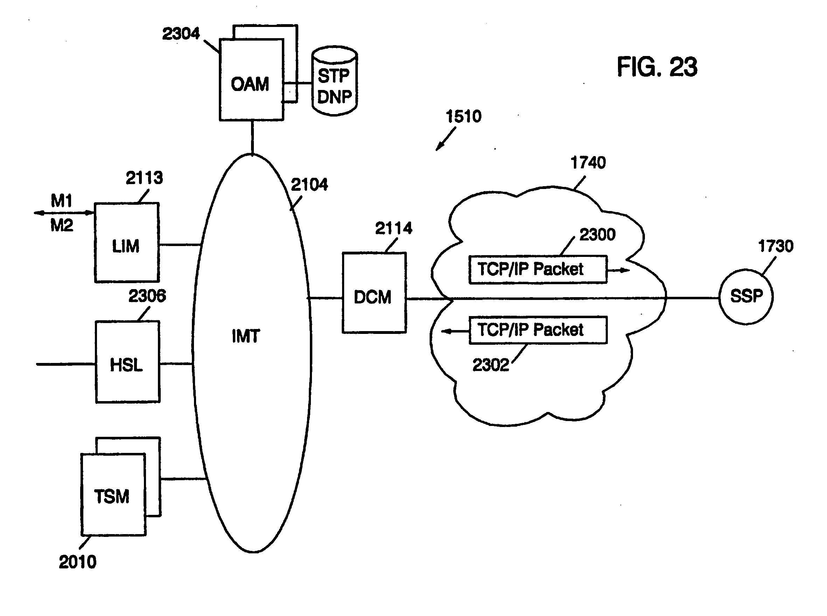

Figure 23 is a block diagram illustrating exemplary hardware for SS7 to IP message flow according to an embodiment of the present invention;

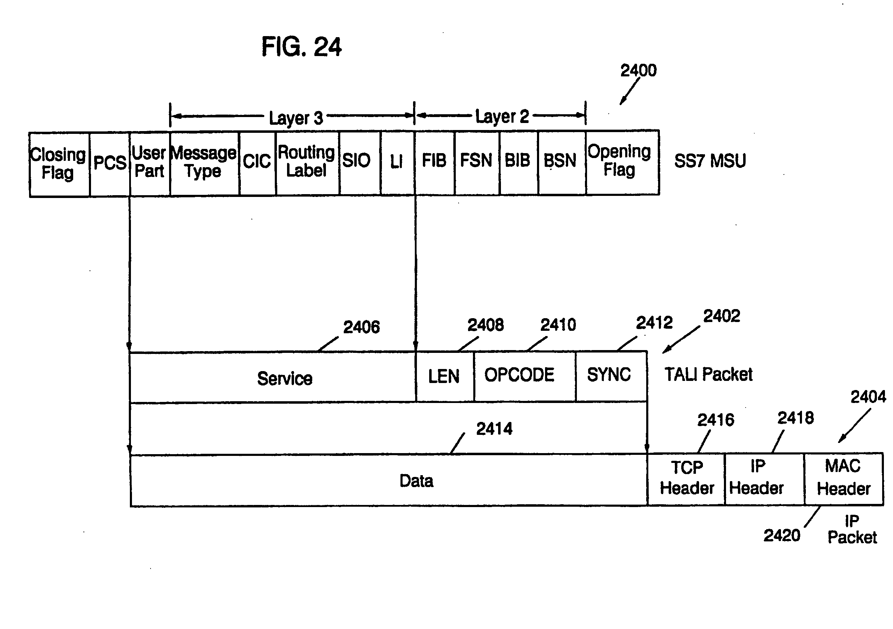

Figure 24 is a block diagram of an exemplary data structure for transmitting SS7 user part messages over IP networks according to an embodiment of the present invention;

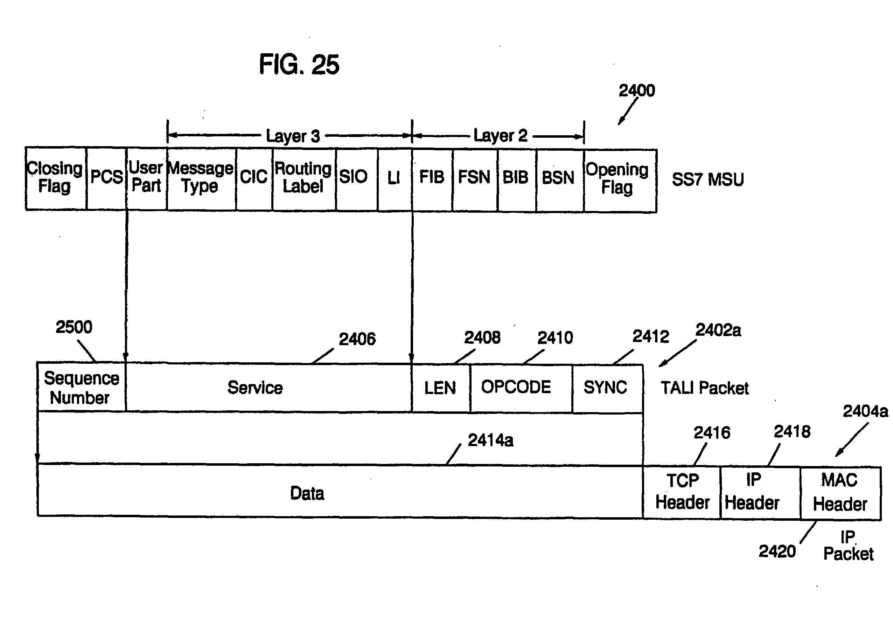

Figure 25 is a block diagram of another exemplary data structure for transmitting SS7 user part messages over IP networks according to an embodiment of the present invention; and

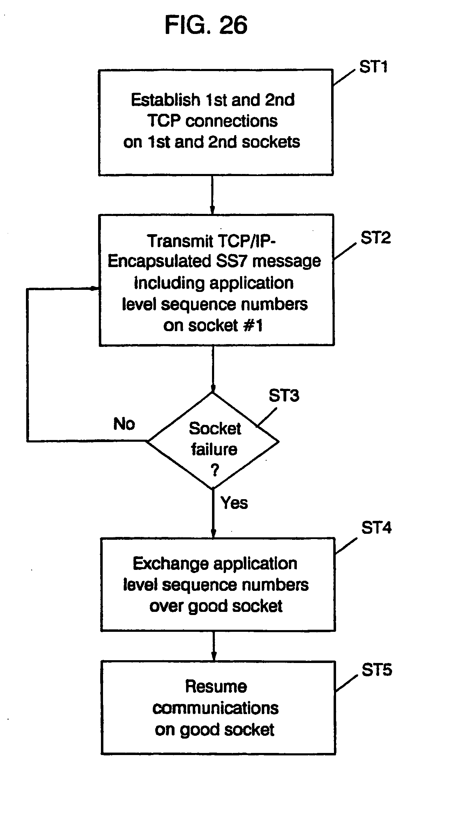

Figure 26 is a flow chart illustrating an exemplary SS7 message recovery routine according to an embodiment of the present invention.

### Detailed Description of Preferred Embodiments

The present invention now will be described more fully hereinafter with reference to the accompanying drawings, in which preferred embodiments of the invention are shown. This invention can, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

### Exemplary Network Configurations for Bi-directional Communication

### of User Part Messages

Figures 10-14 are block diagrams illustrating exemplary network configurations for bidirectional communication of SS7 user part messages between an STP and at least one of the other SPs in an SS7 network using TCP/IP according to embodiments of the present invention. More specifically, Figure 10 illustrates an exemplary network configuration for bidirectional communication of SS7 user part messages between an STP and at least one SSP using TCP/IP, to thereby replace SS7 A links with TCP/IP links. For example, STPs **1000** and **1002** can transmit SS7 user part messages to and receive SS7 user part messages from SSPs **1004** and **1006** over TCP/IP network **1008.**

Figure 11 illustrates an exemplary network configuration for bidirectional communication of SS7 user part messages between STPs of the same hierarchical level, replacing SS7 B links with TCP/IP links. For example, mated STPs **1100** and **1102** can send SS7 user part messages to and receive SS7 user part messages from mated STPs **1104** and **1106** through TCP/IP network **1108.**

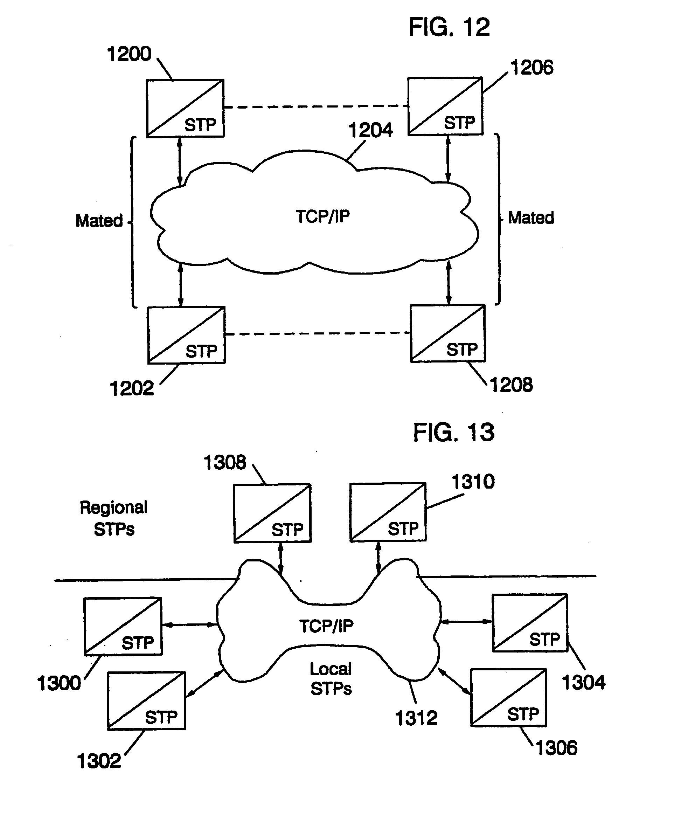

Figure 12 illustrates an exemplary network configuration for bidirectional communication of user part messages between mated STPs using TCP/IP, replacing SS7 C links with TCP/IP links. For example, STP **1200** can send SS7 user part messages to and receive SS7 user part messages from STP **1202** through TCP/IP network **1204.** Similarly, STP **1206** can send SS7 user part messages to STP **1208** and receive SS7 user part messages from STP **1208** through TCP/IP network **1204.**

Figure 13 illustrates an exemplary network configuration for bidirectional communication of user part messages between STPs of different hierarchical levels using TCP/IP links, replacing D links with TCP/IP links. For example, local STPs **1300-1306** can send SS7 user part messages to regional STPs **1308** and **1310** and receive SS7 user part messages from regional STPs **1308** and **1310** through TCP/IP network **1312.**

Figure 14 illustrates an exemplary network configuration for bidirectional communication of SS7 user part messages between STPs and SSPs that are not within the same local STP area using TCP/IP, replacing E links with TCP/IP links. For example, STPs **1400** and **1402** can be located in a different local area from STPs **1404** and **1406** and SSP **1408.** Communication of user part messages between STPs **1400** and **1402** and SSP **1408** would thus conventionally occur over E links. However, according to the present invention, the E links are replaced by TCP/IP network **1410.** As such, STPs **1400** and **1402** are capable of sending SS7 user part messages to and receiving SS7 user part messages from STPs **1404** and **1406** and SSP **1408** through TCP/IP network **1410.** TCP/IP can also be used to replace combinations of A through E links by combining one or more of Figures 10-14.

### STP Including SS7/IP User Part Communicator

Figure 15 is a block diagram of an SP generally designated **1500** according to the present invention. SP **1500** can also be referred to as a "node" of an SS7 network. SP **1500** can comprise any suitable combination of hardware and software for performing the SS7 and IP switching functions. As shown in Figure 15, SP **1500** includes STP **1510** that transfers messages between other SPs of the SS7 network using the SS7 protocol. SP **1500** also includes an SS7/IP user part message communicator **1520** that is preferably integrated within STP **1510** to bidirectionally communicate at least some of the transferred SS7 user part messages between the STP **1510** and at least one of the other SPs, such as SP **1540,** of the SS7 network using an IP network and preferably using TCP/IP network **1530.** In an alternative embodiment, SS7/IP user part message communicator **1520** can be located external to STP **1510.**

STP **1510** including SS7/IP user part message communicator **1520** can be used to provide seamless transport among SS7 user part network elements, and among IP network elements. For example, as shown in Figure 16, STP **1510** can be used to bidirectionally communicate SS7 messages and other messages between a first signaling point **SP1** and a second signaling point **SP2** of two separate SS7 networks as shown by the bidirectional arrow **A1.** Moreover, STP **1510** can also be used to bidirectionally communicate SS7 user part messages or other messages between a first IP node **N1** and a second IP node **N2** via one or more IP networks, as shown by bidirectional arrow **A2.**

Finally, as shown by bidirectional arrows **A3** and **A4,** STP **1510** can be used to communicate SS7 user part messages or other messages between signaling points **SP1** and **SP2** and IP nodes **N1** and **N2.** Thus, an STP including an SS7/IP user part message communicator can become a router for communicating user part messages among SPs in an SS7 network, between SPs in an SS7 network and nodes in an IP network, and among nodes in an IP network. Seamless transport of user part messages between SS7 and IP network elements can thereby be provided using an STP with an SS7/IP user part message communicator.

As stated above, user part messages, such as ISUP messages, are used to perform call setup and tear down functions. Figure 17 illustrates an exemplary network configuration for communicating user part messages between end offices in performing call setup. In Figure 17, SSP **1700** is connected to STP **1510** through SS7 link **1720.** For example, SS7 link **1720** can comprise an A link. STP **1510** is connected to another SSP **1730** through a TCP/IP network **1740.** TCP/IP network **1740** replaces an SS7 A link between STP **1710** and SSP **1730.** STP **1510** includes an SS7/IP user part message communicator **1520** for bidirectionally communicating user part messages between SSP **1700** and SSP **1730.** In the illustrated network, the SSP **1730** is preferably capable of communicating using TCP/IP. In an alternative network configuration, SSP **1730** might not be TCP/IP-enabled and an additional STP including an SS7/IP user part message communicator or a protocol converter can be connected between TCP/IP network **1740** and SSP **1730.** Either configuration is within the scope of the present invention.

Each of the nodes in the network configuration illustrated in Figure 17 has MTP level 3 routing information including a point code. In the illustrated network, SSP **1700** has a point code of 100.100.101. The SSP **1730** has a point code of 200.200.201. STP **1510** has a point code of 300.300.301. Because STP **1510** and the **1730** are connected over an IP network, STP **1510** and SSP **1730** also have IP addresses. In the illustrated embodiment, STP **1710** has an IP address of 128.10.2.30 and SSP **1730** has an IP address of 128.10.2.31.

Figure 18 illustrates an exemplary call flow diagram illustrating the flow of ISUP messages between SSP **1700** and SSP **1730** in performing call setup. In line 1 of the call flow diagram, SSP **1700** transmits an initial address message (IAM) message addressed to SSP **1730** to STP **1510.** The IAM message has an originating point code of 100.100.101 and a destination point code of 200.200.201. When STP **1510** receives the IAM message, STP **1510** does not change the SS7 originating point code or destination point code. Rather, STP **1510** encapsulates the IAM message in a TCP/IP packet with a destination IP address of 128.10.2.31, i.e., the IP address of SSP **1730.** The TCP/IP packet also includes the source IP address of 128.10.2.30, i.e., the IP address of STP **1510.**

In line 2 of the call flow diagram, SSP **1730** transmits an address complete message (ACM) to SSP **1510.** The address complete message includes an originating point code of 200.200.201, i.e., the point code of SSP **1730,** and a destination point code of 100.100.101, i.e., the point code of SSP **1700.** The destination IP address, however, is that of STP **1510,** i.e., 128.10.2.30. The STP **1510** receives the ACM message, removes the TCP/IP header, attaches any needed SS7 information, and forwards the ACM message to SSP **1700.**

In line 3 of the call flow diagram, when the calling party answers the call, SSP **1730** transmits an answer message (ANM) to SSP **1700.** The answer message can be transmitted in a manner similar to the ACM message and thus the transmission need not be further described.

Once the answer message has been received by SSP **1700,** a call between end users **1750** and **1760** is in progress. The call continues until either party goes on-hook. In the illustrated call flow diagram, when end user **1760** connected to SSP **1730** goes on-hook, a release message (REL) is transmitted from SSP **1730** to SSP **1700.** The release message is addressed and routed in a manner similar to the ACM message described above. The SSP 1700 responds to the release message by transmitting a release complete message (RLC) to SSP **1730.** The release complete message is addressed and routed in a manner similar to the IAM message described above.

Because STP **1510** performs bidirectional communication of user part messages between end offices, the resources required for performing call setup operations are reduced. For example, it is no longer necessary to have dedicated SS7 links between end offices for performing call signaling operations. One or more of the links can be replaced by an IP network, such as a TCP/IP network or a UDP/IP network.

### Bidirectional Communication Methods and Computer Programs

An STP for an SS7 network according to the present invention includes means for and provides the steps of, bidirectionally transferring SS7 user part messages among SPs of the SS7 network. The STP also includes means for and provides the steps of bidirectionally transferring user part messages between SPs of the SS7 network and IP nodes of an IP network. The STP also includes means for and provides the steps of, bidirectionally transferring messages among IP nodes of the IP network. Bidirectional transfer preferably takes place using TCP/IP.

Figures 19 and 20 are flowcharts and Figures 21-24 are block diagrams illustrating exemplary hardware and software for bidirectional communication of SS7 user part messages between an STP and at least one of the other SPs of an SS7 network according to embodiments of the present invention. The present invention can be embodied as methods, systems (apparatus), and/or computer program products. Accordingly, the present invention can take the form of an entirely hardware embodiment, an entirely software embodiment or an embodiment combining software and hardware aspects.

It will also be understood that one or more of the blocks in Figures 19-24, and combinations of these blocks, can be implemented by computer program instructions. These computer program instructions can be provided to a processor or other programmable data processing apparatus to produce a machine, such that the instructions which execute on the processor or other programmable data processing apparatus create means for implementing the functions specified in the flowchart block or blocks. These computer program instructions can also be stored in a computer-readable medium that can direct a processor or other programmable data processing apparatus to function in a particular manner, such that the instructions stored in the computer-readable medium produce an article of manufacture including instruction means which implement the functions specified in the flowchart block or blocks.

Accordingly, blocks in Figures 19-24 support combinations of means for performing the specified functions, combinations of steps for performing the specified functions and program instruction means for performing the specified functions. It will also be understood that each block, and combinations of blocks, can be implemented by special purpose hardware-based computer systems which perform the specified functions or steps, or by combinations of special purpose hardware and computer instructions.

Figure 19 illustrates exemplary steps that can be performed by an SS7/IP user part message communicator embodied in an STP in processing an SS7 user part message for transmission over an IP network according to an embodiment of the present invention. In step **ST1** the SS7/IP user part message communicator receives an SS7 user part message from an SS7 node. The SS7 user part message includes an SS7 MTP level and an SS7 user part level, such as an ISUP level. A portion of the MTP level information can be stripped or removed from the SS7 message, as shown in step **ST2.** However, according to a preferred embodiment of the invention, MTP level 3 routing information is preferably retained in the message.

In step **ST3,** the remaining MTP level information and user part level in the SS7 message are placed in a TCP transport layer to create a TCP message. The TCP transport layer preferably includes the TCP port on which a connection has been established with the destination SS7 or IP node. It should be noted at this point that all of the information contained in the original SS7 MTP level can be placed in the TCP transport layer, if desired. Furthermore, the MTP level information that is ultimately included in the TCP transport layer can be modified or altered from it's original form prior to TCP encapsulation. That is, the bit stream representing the MTP level information in the original SS7 MSU and the bit stream representing the MTP level information in the TCP-encapsulated message need not be identical. In addition, additional data, such as application-level sequence number data and operation code data can be added to the message before or after the message is TCP- or IP-encapsulated.

In step **ST4,** an IP network layer is added to the TCP message to create a TCP/IP message. The IP network layer includes the destination IP address of the node to which the original SS7 messages was addressed. The destination IP address can be determined using a lookup table or other routing mechanism based on the destination point code in the original SS7 message. In an alternative embodiment of the invention, steps **ST3** and **ST4** can be combined so that the TCP and IP information is added in a single step. Finally, in step **ST5,** the TCP/IP message is transmitted to the IP address over an IP network **1530** (Figure 15) using TCP transport. The IP address can represent an SS7 node configured to communicate using TCP/IP or a TCP/IP node without SS7 capabilities. Thus, the user part message can be sent from an STP, another SS7 node, or an IP node using a TCP/IP network.

Figure 20 illustrates processing that can be performed by SS7/IP user part message communicator **1520** of STP **1510** (Figure 15) in processing an IP-encapsulated SS7 message according to an embodiment of the present invention. As shown in step **ST1,** a TCP/IP message including an encapsulated SS7 user part message is received from an IP network. The TCP/IP message includes SS7 MTP level information and user part payload data that are encapsulated in TCP transport and IP network layers. In step **ST2,** the IP network layer is removed from the IP message to create a TCP message that includes SS7 MTP level information and SS7 user part payload data in a TCP transport layer. In step **ST3,** the TCP transport layer is removed from the TCP message to create an SS7 message including SS7 MTP level 3 information and an SS7 user part payload level. In an alternative embodiment of the invention, steps **ST2** and **ST3** can be combined such that the TCP/IP information is removed in one step. Additional information, such as an application-level sequence number and an operations code can be also removed from the message and processed. In step **ST4,** MTP levels 1 and 2 information is attached to the message, as required, to form a functional SS7 message. If no MTP level information was removed from the TCP/IP message by SP **1540,** then no additional MPT levels 1 and 2 information needs to be added. Finally, in step **ST5,** the SS7 message is routed. Thus, message can be sent from SP **1540** to STP **1510** using the TCP/IP network **1530,** rather than an SS7 link.

Although the flow charts in Figures 19 and 20 respectively show the addition and removal of TCP transport layer information from an SS7 user part message, the present invention is not limited to such an embodiment. For example, in an alternative embodiment, and SS7 user part message can be encapsulated in a UDP/IP message for transmission over a UDP/IP network. Similarly, UDP/IP-encapsulated SS7 user part messages can be received over a UDP/IP network and the UDP/IP portion of the messages can be removed to produce the SS7 user part messages.

### Hardware for Performing Bi-directional SS7/IP User Part Message Communications

Figure 21 is a block diagram of a hardware configuration for STP **1510** that includes an integrated SS7/IP user part message communicator according to an embodiment of the present invention. As shown in Figure 21, STP **1510** includes three cooperating subsystems: maintenance and administration subsystem (MAS) **2102,** a communication subsystem comprising a pair of counter rotating interprocessor message transport (IMT) buses **2104,** and at least one application subsystem **2106.** Application subsystem **2106** can include a plurality of modules. For example, at least one application service module (ASM) **2108** is used to store translation tables and screening data for gateway screening. At least one translation service module (TSM) **2110** that is used for global title translation can be included. At least one application communication module (ACM) **2112** provides unidirectional access to a remote host for STP-LAN functionality. At least one link interface module (LIM) **2113** provides a physical input/output terminal for two SS7 links. Each of the elements **2108-2113** in application subsystem **2106** can include one or more printed circuit cards including processing circuitry and memory devices configured to perform the described functions.

According to an embodiment of the present invention, at least one data communications module (DCM) **2114** provides the necessary hardware for bidirectional communication of SS7 messages over an IP network. DCM **2114** can include a general purpose microprocessor, network communications hardware, program memory, and data memory for bidirectionally communicating SS7 user part messages over an IP network. The SS7/IP user part message communicator **1520** (not shown in Figure 21) can reside in the program memory of DCM **2114** and cause the processor to perform bidirectional SS7/IP user part communications functions, as will be described in more detail below. DCM **2114** performs bidirectional SS7 to TCP/IP or UDP/IP protocol stack mapping, as previously described. As shown in Figure 21, each DCM **2114** interfaces with both IMT bus **2104** and an associated TCP/IP network **2116.** By interfacing with IMT bus **2104,** high speed communications can be obtained with other modules in the STP **1510.**

### SS7/IP User Part Message Communicator

Figure 22 is a detailed block diagram illustrating software executing on the STP **1510** for performing bidirectional SS7/IP user part message communications according to the present invention. In the illustrated embodiment, STP **1510** includes an SS7/IP user part message communicator **1520.** SS7/IP user part message communicator **1520** includes application layer **2200** and SS7/IP converter **2201.** The functions of application layer **2200** and SS7/IP converter **2201** will be discussed in detail below. The software executing on LIMs **2113a** and **2113b** and DCM **2114** performs combinations of SS7 functions including message handling discrimination (HMDC) functions, message handling distribution (HMDT) functions, message handling congestion (HMGC) functions and message handling routing (HMRT) functions. As stated above, HMDC functions **2202a** and **2202c** determine if received MSUs are destined for the STP itself and should be processed at the STP or if the MSUs should be routed through the STP to another SS7 node. HMRT functions **2204a** and **2204c** determine the signaling link over which the outgoing message is sent. HMGC function **2205** monitors signaling point processing load. Congestion procedures exist to detect when the processing load is too high and perform load shedding to reduce the processing load.

Still referring to Figure 22, when an incoming SS7 user part message **2203** arrives at LIM **2113a,** the SS7 levels 1 and 2 information can be removed and the message is queued in queue **2200a.** HMDC function **2202a** determines whether routing is required. Determining whether routing is required can include examining the DPC in the message. If HMDC function **2202a** determines that routing is required, HMRT **2204a** routes the message to DCM **2114** using the IMT bus **2104.** Application layer **2200** determines the data components that are passed on to SS7/IP converter **2201.** In one embodiment, application layer **2200** might determine that all of the MTP and user part payload data are to be passed on to SS7/IP converter **2201.** It should be appreciated that in alternate configurations, application layer **2200** can determine that only certain components of the MTP layer data are needed, and consequently only a portion of the MTP level data would be passed, along with the user part payload, to SS7/IP converter **2201.** However, as will be discussed in more detail below, application layer **2200** preferably retains the routing information in the SS7 user part message. In any event, the SS7/IP converter **2201** places the MTP level information and the user part level payload in a TCP or UDP transport layer and adds an IP network layer including an IP address. Additional information, such as application-level sequence numbers and operation codes can also be added to the message. TCP/IP- or UDP/IP-encapsulated message **2210** is then routed to the target SSP via the IP network.

Still continuing with the description of Figure 22, an incoming TCP/IP- or UDP/IP-encapsulated user part message **2212** is received from an SP via an IP network. The SS7/IP converter **2201** removes the IP network layer and the TCP or UDP transport layer, while any missing MTP layer information is added so as to create a complete SS7 message including an MTP level and a user part level. The message is queued in a queue **2200c** and processed by HMDC function **2202c** to determine whether routing is required. If routing is required, HMRT function **2204c** forwards the message to HMGC function **2205** on LIM **2113b.** HMCG function **2205** stores the message in a queue **2200b.** Once the message reaches the head of the queue, outgoing unencapsulated SS7 user part message **2213** is sent to the intended SP via an SS7 link.

Figure 23 is a block diagram illustrating message flow through STP **1510** when processing user part messages sent to and received from SSP **1730** over TCP/IP network **1740** according to an embodiment of the present invention. In Figure 23, an SS7-formatted user part message **(M1)** is received by STP **1510** via a conventional SS7 LIM **2113.** For the purposes of illustration, it is assumed that the user part message **M1** is an initial address message (IAM). Based on information contained in the routing label of the user part message **M1,** LIM **2113** determines that the IAM message is destined for an SSP **1730** to which STP **1510** is connected via TCP/IP network **1740.** LIM **2113** then routes the message **M1** internally via IMT bus **2104** to DCM module **2114.** DCM module **2114** performs translation and converts SS7 user part message **M1** into a TCP/IP packet **2300,** wherein some or all of the MTP level 2 - 3 information and the user part payload layer are transmitted, as described above. TCP/IP packet **2300** is then sent across the TCP/IP network to SSP **1730.**

In a second scenario, SSP **1730** generates a TCP/IP packet **2302** containing an SS7 user part message that is routed back to STP **1510.** In this case, for the purposes of illustration, it is assumed that the second user part message is an address complete message (ACM). It is also assumed in this example that SSP **1730** generates and transmits the message in TCP/IP packet **2302,** which is similar in structure to TCP/IP packet **2300,** described above. TCP/IP packet **2302** is passed through TCP/IP network **1740,** and eventually received by STP **1510** via the DCM module **2114.** TCP/IP packet **2302** is then translated into an SS7 format by DCM **2114** and routed internally over IMT bus **2104** to the appropriate LIM module **2113** and out onto the SS7 network as a user part message **M2.**

OAM **2304** provides operating, administration and maintenance functionality. This functionality includes user I/O, disk services, database updates to active cards and the general ability to load the resident software on the LIMs, ASMs, etc. HSL **2306** is a high speed signaling link implemented according to the Bellcore GR-2878-core specification. This high speed link is an SS7 link that operates on ATM over T1 as opposed to MTP over DSO physical network. The following table illustrates OSI standard layers and compares MTP Low Speed Links, MTP High Speed Links, traditional IP and operation of a DCM according to an embodiment of the present invention.

**TABLE 1: Comparison of OSI Layers, MTP Low and High Speed Links, IP Layers, and DCM Functionality**

| **OSI (Standard)** | **MTP Low Speed Links** | **MTP High Speed Links** | **IP (Traditional)** | **DCM** |
|---|---|---|---|---|
| Application | ISUP | ISUP | - | ISUP |
| Presentation | - | - | - | - |
| Session | - | - | - | - |
| Transport | - | - | TCP | - |
| Network | MTP 3 | MTP 3 | IP | MTP 3 |
| Data link | MTP-2 | SAAL AAL-5 | MAC | Gateway Adaptation Layer TCP IP MAC |
| Physical | DSO | T1 | 10/100 base-t | 10/100 base-t |

### Data Structures

Figure 24 illustrates a data structure for bidirectionally communicating SS7 user part messages in internet protocol packets according to an embodiment of the present invention. In Figure 24, SS7 MSU generally designated **2400** is encapsulated in transport adapter layer interface (TALI) packet generally designated **2402,** which is in turn encapsulated in IP packet **2404.** More particularly, the layer 3 information in SS7 MSU **2400,** including the message type field, the circuit information code field, the routing label, and the service information octet are encapsulated in service field **2406** of TALI packet **2402.** The user part field is also encapsulated in service field **2406.** The remaining portions of the SS7 MSU are preferably discarded. TALI packet **2402,** in addition to the SS7 layer 3 information, includes length field **2408,** opcode field **2410,** and synchronization field **2412.** Length field **2408** specifies the length of the data in service field **2406** of TALI packet **2402.** Opcode field **2410** specifies an SS7 message type. In this example, the opcode field would specify an SS7 user part message type such as ISUP, TUP, or BISUP. Sync field **2412** indicates the start of a packet. Sync field **2412** is useful in determining packet boundaries in TCP streams if the value in the length field **2408** is incorrect.

TALI packet **2402** is encapsulated in data field **2414** of IP packet **2404.** TCP header field **2416** includes TCP header information, such as TCP port numbers, for bidirectional user part message communication. IP header field **2418** includes IP header information such as source and destination IP addresses, for IP packet **2404.** Finally, MAC header field **2420** includes physical and network information for delivering the IP packet **2404** over a physical network.

Figure 25 illustrates an alternative data structure for encapsulating an SS7 user part message in an IP packet according to an embodiment of the present invention. The data structure illustrated in Figure 25 provides increased reliability using message sequencing and retrieval. In Figure 25, SS7 MSU **2400** is the same as the SS7 MSU illustrated in Figure 24. TALI packet generally designated **2402a** however, is different from TALI packet **2402** illustrated in Figure 24. In particular, TALI packet **2402a** includes an application-level sequence number field **2500** for sequencing IP packets between SS7 MSUs. In the illustrated embodiment, application-level sequence number field **2500** is included as a trailer to TALI packet **2402a.** In an alternative embodiment, application-level sequence number field **2500** can be included as a header to TALI packet **2402a** or at any other location in TALI packet **2402a.** Application-level sequence number field **2500** provides a sequence number of a TALI packet in a communication between SS7 MSUs. Processing the sequence number value to provide increased reliability will be discussed in more detail below.

IP packet **2404a** includes data field **2414a** that includes TALI packet **2402a.** Data field **2414a** thus includes application-level sequence number field **2500.** The remaining fields in IP packet **2404a** are the same as those illustrated in Figure 24 and need not be further described.

Figure 26 illustrates an exemplary SS7 message recovery routine for reliable communication of IP-encapsulated SS7 messages between SS7 nodes. The SS7 message recovery routine can be software executed by SS7 communication hardware in SS7 nodes. For example, the SS7 message recovery routine can be executed by a DCM or its equivalent in an STP. Alternatively, the SS7 message recovery routine can be executed by other nodes, such as SSPs, SCPs, or non-SS7 IP nodes for reliable IP communications. In Figure 26, the SS7 packet recovery routine is explained generally in terms of steps performed by two SS7 nodes. The nodes are referred to as node A and node B, respectively. It will be understood by those of ordinary skill in the art that either node could be an STP, an SSP, an SCP or other node.

In step **ST1,** node A establishes first and second TCP connections on first and second TCP sockets with node B. In step **ST2,** node A transmits TCP/IP-encapsulated SS7 messages including application-level sequence numbers indicating the sequence of the packets on the first socket to node B. In step **ST3,** node A determines whether a socket failure has occurred. If a socket failure has not occurred, node A continues to transmit TCP packets to node B on socket number 1. Since TCP communications are bidirectional, node B can also transmit TCP packets to node A on socket number 1. The packets transmitted from node B to node A preferably also include application-level sequence numbers indicating the order of packets transmitted from node B to node A.

In step **ST4,** if a socket failure has occurred, for example on socket number 1, nodes A and B exchange application-level sequence numbers over the good socket for the last packets transmitted and received. For example, node A transmits the application-level sequence number of the last packet received from node B to node B. Node B transmits the application-level sequence number of the last packet transmitted to node A. Similarly, node B transmits the application-level sequence number indicating the last packet received from node A to node A. Node B transmits the application-level sequence number indicating the last packet transmitted to node A. In step **ST5,** node A and node B resume data communications on the good socket, i.e., socket 2 based on the application-level sequence numbers. For example, node B can transmit lost packets to node A, and node A can transmit the lost packets to node B on the second socket. In this manner, reliable communications are established between SS7 nodes even when a socket fails. Conventional TCP sequence numbering does not address this issue because TCP does not provide a mechanism for packet retrieval when a socket fails. The application-level sequence numbering of the present invention allows communications to resume at the point where communications were lost, rather than requiring retransmission of an entire sequence of packets.

Although the invention has thus far been described in detail with respect to replacing SS7 links between an STP and other SS7 type SP network elements with TCP/IP links, the present invention can also be employed to facilitate communication between SS7 network elements and IP based network elements via TCP/IP links. Furthermore, the discussion and examples provided above specifically relate the use of the present invention to SS7 user part messages. However, it will be appreciated by those skilled in the art that any SS7 message type that requires MTP routing label information in order to effectively perform or serve it's proper function can be communicated bidirectionally between SS7 and IP networks using the STP of the present invention.

It will be understood that various details of the invention can be changed without departing from the scope of the invention. Furthermore, the foregoing description is for the purpose of illustration only, and not for the purpose of limitation--the invention being defined by the claims.

## Claims

1. A method for reliably recovering signaling system seven (SS7) user part message packets in response to a socket failure, the method comprising:
(a) transmitting IP-encapsulated SS7 messages from a first node to a second node over the first socket, the messages each including an application-level sequence number for sequencing messages received by the first and second nodes; and
(b) in response to failure of the first socket, transmitting, over the second socket, a first recovery packet from the first node to the second node, the first recovery packet including an application-level sequence number indicating the last message received by the first node.

2. The method of claim 1 wherein transmitting messages over first and second sockets includes transmitting messages over first and second transmission control protocol (TCP) sockets.

3. The method of claim 1 wherein transmitting messages over first and second sockets includes transmitting messages over first and second user datagram protocol (UDP) sockets.

4. The method of claim 1 comprising, after receiving the first recovery packet at the second node, resuming data communications with the first node over the second socket based on the application-level sequence number.

5. The method of claim 1 wherein the first and second nodes comprise SS7 nodes.

6. The method of claim 1 wherein the first and second nodes comprise IP nodes.

7. The method of claim 1 wherein the first node is an SS7 node and the second node is an IP node.

8. A signaling system seven (SS7) message recovery computer-product including computer-executable instructions embodied in a computer-readable medium for performing steps comprising:
(a) transmitting internet protocol (IP) encapsulated SS7 messages from a first node to a second node over the first socket, the messages each including an application-level sequence number for sequencing messages received by the first and second nodes; and
(b) in response to failure of the first socket, transmitting, over the second socket, a first recovery packet from the first node to the second node, the first recovery packet including an application-level sequence number indicating the last message received by the first node.

9. The SS7 message recovery computer-product of claim 8 wherein transmitting data packets over first and second sockets includes transmitting data packets over first and second transmission control protocol (TCP) sockets.

10. The SS7 message recovery computer-product of claim 8 wherein transmitting messages over first and second sockets includes transmitting messages over first and second user datagram protocol (UDP) sockets.

11. The SS7 message recovery computer-product of claim 8 comprising, after receiving the first recovery packet at the second node, resuming data communications with the first node over the second socket based on the application-level sequence number.

12. The SS7 message recovery computer-product of claim 8 wherein transmitting messages from a first node to a second node comprises transmitting messages from a first SS7 node to a second SS7 node.

13. The SS7 message recovery computer-product of claim 8 wherein transmitting messages from a first node to a second node comprises transmitting messages from a first SS7 node to a first IP node.

14. The SS7 message recovery computer-product of claim 8 wherein transmitting messages from a first node to a second node comprises transmitting messages from a first IP node to a second IP node.

## Patentansprüche

1. Verfahren zum zuverlässigen Wiederherstellen von Signalisiersystem-sieben-(SS7-)Nutzerteil-Nachrichtenpaketen in Antwort auf einen Socket-Fehler, wobei das Verfahren aufweist:
(a) Senden von IP-verkapselten SS7-Nachrichten von einem ersten Knoten zu einem zweiten Knoten über den ersten Socket, wobei jede der Nachrichten eine Anwendungsebenen-Laufzahl für die Sequenzialisierung von Nachrichten enthält, welche von dem ersten und zweiten Knoten empfangen werden; und
(b) in Antwort auf den Fehler des ersten Socket, Senden eines ersten Wiederherstellungspakets von dem ersten Knoten zu dem zweiten Knoten über den zweiten Socket, wobei das erste Wiederherstellungspaket eine Anwendungsebenen-Laufzahl beinhaltet, welche die letzte durch den ersten Knoten empfangene Nachricht anzeigt.

2. Verfahren nach Anspruch 1, wobei das Senden der Nachrichten über den ersten und den zweiten Socket das Senden der Nachrichten über erste und zweite Übertragungssteuerprotokoll-(TCP-)Sockets beinhaltet.

3. Verfahren nach Anspruch 1, in welchem das Senden der Nachrichten über die ersten und zweiten Sockets das Senden von Nachrichten über erste und zweite Nutzer-Datagramm-Protokoll-(UDP-)Sockets beinhaltet.

4. Verfahren nach Anspruch 1, welches nach dem Empfangen des ersten Wiederherstellungspaketes an dem zweiten Knoten das Wiederaufnehmen der Datenkommunikation mit dem ersten Knoten über den zweiten Socket basierend auf der Anwendungsebenen-Laufzahl aufweist.

5. Verfahren nach Anspruch 1, in welchem der erste und der zweite Knoten SS7-Knoten aufweisen.

6. Verfahren nach Anspruch 1, in welchem der erste und der zweite Knoten IP-Knoten aufweisen.

7. Verfahren nach Anspruch 1, in welchem der erste Knoten ein SS7-Knoten und der zweite Knoten ein IP-Knoten ist.

8. Signalisiersystem-sieben-(SS7-)Nachrichtenwiederherstellungs-Computerprodukt, welches von einem Computer ausführbare Instruktionen beinhaltet, welche in einem vom Computer lesbaren Medium zum Durchführen der Schritte eingebettet sind, um die Schritte durchzuführen, welche aufweisen:
(a) Senden von Internet-Protokoll-(IP-)verkapselten SS7-Nachrichten von einem ersten Knoten zu einem zweiten Knoten über den ersten Socket, wobei die Nachrichten jeweils eine Anwendungsebenen-Laufzahl zum Sequenzieren von Nachrichten beinhalten, welche durch den ersten und den zweiten Knoten empfangen werden; und
(b) in Antwort auf einen Fehler des ersten Sockets Senden eines ersten Wiederherstellungspakets von dem ersten Knoten zu dem zweiten Knoten über den zweiten Socket, wobei das erste Wiederherstellungspaket eine Anwendungsebenen-Laufzahl beinhaltet, welche die letzte von dem ersten Knoten empfangene Nachricht anzeigt.

9. SS7-Nachrichtenwiederherstellungs-Computerprodukt nach Anspruch 8, in welchem das Senden der Datenpakete über erste und zweite Sockets das Senden der Datenpakete über erste und zweite Sendesteuerprotokoll-(TCP-)Sockets beinhaltet.

10. SS7-Nachrichtenwiederherstellungs-Computerprodukt nach Anspruch 8, in welchem das Senden von Nachrichten über erste und zweite Sockets das Senden der Nachrichten über erste und zweite Benutzer-Datagramm-Protokoll-(UDP-)Sockets beinhaltet.

11. SS7-Nachrichtenwiederherstellungs-Computerprodukt nach Anspruch 8, welches nach dem Empfangen des ersten Wiederherstellungspaketes an dem zweiten Knoten das Wiederaufnehmen der Datenkommunikation mit dem ersten Knoten über den zweiten Socket basierend auf der Anwendungsebenen-Laufzahl aufweist.

12. SS7-Nachrichtenwiederherstellungs-Computerprodukt nach Anspruch 8, in welchem das Senden von Nachrichten von einem ersten Knoten zu einem zweiten Knoten das Senden der Nachrichten von einem ersten SS7-Knoten zu einem zweiten SS7-Knoten aufweist.

13. SS7-Nachrichtenwiederherstellungs-Computerprodukt nach Anspruch 8, in welchem das Senden der Nachrichten von einem ersten Knoten zu einem zweiten Knoten das Senden der Nachrichten von einem ersten SS7-Knoten zu einem ersten IP-Knoten aufweist.

14. SS7-Nachrichtenwiederherstellungs-Computerprodukt nach Anspruch 8, in welchem das Senden der Nachrichten von einem ersten Knoten zu einem zweiten Knoten das Senden der Nachrichten von einem ersten IP-Knoten zu einem zweiten IP-Knoten aufweist.

## Revendications

1. Procédé de reprise fiable des paquets de messages du sous-système utilisateur du système de signalisation numéro 7 (SS7) en réponse à une défaillance d'une interface de connexion, le procédé comprenant :
(a) la transmission de messages SS7 encapsulés dans des paquets IP d'un premier noeud à un second noeud via la première interface de connexion, les messages comprenant chacun un numéro de séquence du niveau d'application pour séquencer les messages reçus par les premier et second noeuds ; et
(b) en réponse à la défaillance de la première interface de connexion, la transmission, via la seconde interface de connexion, d'un premier paquet de reprise du premier noeud au second noeud, le premier paquet de reprise comprenant un numéro de séquence du niveau d'application indiquant le dernier message reçu par le premier noeud.

2. Procédé selon la revendication 1, dans lequel la transmission de messages via les première et seconde interfaces de connexion comprend la transmission de messages via des première et seconde interfaces de connexion de protocole de contrôle des transmissions (TCP).

3. Procédé selon la revendication 1, dans lequel la transmission de messages via les première et seconde interfaces de connexion comprend la transmission de messages via des première et seconde interfaces de connexion de protocole de datagramme utilisateur (UDP).

4. Procédé selon la revendication 1, comprenant, après la réception du premier paquet de reprise au niveau du second noeud, la reprise des communications de données avec le premier noeud via la seconde interface de connexion sur la base du numéro de séquence du niveau d'application.

5. Procédé selon la revendication 1, dans lequel les premier et second noeuds comprennent des noeuds SS7.

6. Procédé selon la revendication 1, dans lequel les premier et second noeuds comprennent des noeuds IP.

7. Procédé selon la revendication 1, dans lequel le premier noeud est un noeud SS7 et le second noeud est un noeud IP.

8. Programme informatique de reprise de messages du système de signalisation numéro 7 (SS7) comprenant des instructions exécutables par ordinateur incorporées dans un support lisible par ordinateur afin d'exécuter les étapes comprenant :
(a) la transmission de messages SS7 encapsulés dans des paquets de protocole Internet (IP) d'un premier noeud à un second noeud via la première interface de connexion, les messages comprenant chacun un numéro de séquence du niveau d'application pour séquencer les messages reçus par les premier et second noeuds ; et
(b) en réponse à la défaillance de la première interface de connexion, la transmission, via la seconde interface de connexion, d'un premier paquet de reprise du premier noeud au second noeud, le premier paquet de reprise comprenant un numéro de séquence du niveau d'application indiquant le dernier message reçu par le premier noeud.

9. Programme informatique de reprise de message SS7 selon la revendication 8, dans lequel la transmission des paquets de données via les première et seconde interfaces de connexion comprend la transmission des paquets de données via des première et seconde interfaces de connexion de protocole de contrôle des transmissions (TCP).

10. Programme informatique de reprise de message SS7 selon la revendication 8, dans lequel la transmission des messages via les première et seconde interfaces de connexion comprend la transmission des messages via des première et seconde interfaces de connexion de protocole de datagramme utilisateur (UDP).

11. Programme informatique de reprise de message SS7 selon la revendication 8, comprenant, après la réception du premier paquet de reprise au second noeud, la reprise des communications de données avec le premier noeud via la seconde interface de connexion sur la base du numéro de séquence du niveau d'application.

12. Programme informatique de reprise de message SS7 selon la revendication 8, dans lequel la transmission des messages d'un premier noeud à un second noeud comprend la transmission des messages d'un premier noeud SS7 à un second noeud SS7.

13. Programme informatique de reprise de message SS7 selon la revendication 8, dans lequel la transmission des messages d'un premier noeud à un second noeud comprend la transmission des messages d'un premier noeud SS7 à un premier noeud IP.

14. Programme informatique de reprise de message SS7 selon la revendication 8, dans lequel la transmission des messages d'un premier noeud à un second noeud comprend la transmission des messages d'un premier noeud IP à un second noeud IP.
